# EUROPÄISCHE PATENTSCHRIFT

(11) **EP 1 074 324 B1**
(45) Veröffentlichungstag und Bekanntmachung des Hinweises auf die Patenterteilung: **11.08.2004**
(21) Anmeldenummer: 99810676.9
(22) Anmeldetag: 27.07.1999
(51) Int. Cl.: B23D 15/06

(54) **Vorrichtung zur Dünnblech-Bearbeitung**
Apparatus for cutting thin metal sheets
Dispositif pour couper des feuilles métalliques

(43) Veröffentlichungstag der Anmeldung: 07.02.2001
(73) Patentinhaber: MABI AG, 5106 Veltheim (CH)
(72) Erfinder: Biland, Max, CH-5106 Veltheim/AG (CH)
(74) Vertreter: Groner, Manfred

(56) Entgegenhaltungen:
- EP-A- 0 152 020
- US-A- 5 195 413

## Beschreibung

Die Erfindung betrifft eine Vorrichtung zur Dünnblech-Bearbeitung nach dem Oberbegriff des Anspruchs 1.

Die gattungsbildende EP-A-0 152 020 offenbart eine Vorrichtung zum Trennschneiden von Blechen, die ein Paar von Trennschneidmessern aufweist, die zum Schneiden des Blechs bis zur gegenseitigen Überlappung periodisch wiederkehrend aufeinander zu- und voneinander wegbewegt werden. Die Trennschneidmesser sind um eine vertikale Achse drehbar, jedoch nicht verfahrbar.

Eine weitere Vorrichtung zur Dünnblech-Bearbeitung ist aus der EP 0 620 072 des Anmelders bekannt geworden. Bei dieser sind das Werkzeugoberteil und das Werkzeugunterteil je an übereinander angeordneten Führungen über Antriebsmittel koordiniert horizontal verfahrbar und zusätzlich vertikal zueinander gesteuert verstellbar. Die Schneidwerkzeuge weisen je ein rotierendes Schneidmesser auf. Diese Vorrichtung hat sich in der Praxis für das Zuschneiden von dünnen Blechformen, wie sie beispielsweise für die Herstellung von Isolierverschalungen benötigt werden, bewährt. Ähnlich wie bei einer Laserblechschneidemaschine sind weitgehend beliebige Innen- und Aussenformen möglich. Mit einem geeigneten Optimierungsprogramm ist es möglich, die Blechtafel mit möglichst kleinem Verschnitt zu bearbeiten.

Der Erfinder hat sich nun die Aufgabe gestellt, eine Vorrichtung der genannten Art zu schaffen, die noch preisgünstiger ist aber dennoch einen qualitativ hervorragenden Zuschnitt von dünnen Blechformen ermöglicht.

Die Aufgabe ist bei einer gattungsgemässen Vorrichtung gemäss Anspruch 1 gelöst. Bei der erfindungsgemässen Vorrichtung sind die vergleichsweise aufwändigen rotierenden und angetriebenen Schneidmesser durch wesentlich einfachere feststehende Messer ersetzt. Um die oszillierende Bewegung des einen Messers auszuführen, genügt ein einfacher Hubantrieb. Trotz der wesentlich einfachen Ausführung kann an beliebiger Stelle einer Blechtafel mit dem Schneiden begonnen werden. Ein wesentlicher Vorteil der erfindungsgemässen Vorrichtung wird auch darin gesehen, dass noch engere Kurven geschnitten werden können, als dies bei der gattungsgemässen Vorrichtung mit rotierenden Schneidmessern möglich war.

Ein Ausführungsbeispiel der Erfindung wird nachfolgend anhand der Zeichnung näher erläutert. Es zeigen:
- Figur 1: ein vertikaler Schnitt durch eine erfindungsgemässe Vorrichtung,
- Figur 2: eine Teilansicht eines Bleches und zweier Messer,
- Figur 3: eine Draufsicht auf ein Stanzwerkzeug,
- Figur 4: eine vereinfachte schematische Ansicht einer erfindungsgemässen Vorrichtung,
- Figur 5: eine Ansicht eines Transportmittels und
- Figur 6: eine weitere Ansicht des Transportmittels gemäss Figur 5.

Die Vorrichtung weist ein Maschinengestell 20 mit einem Portalrahmen 17 auf, der zwei horizontal und parallel zueinander ver laufende Führungswangen 18 und 19 besitzt. Auf der oberen Führungswange 18 ist ein Schlitten 32 mit einem Werkzeugoberteil 2 horizontal verfahrbar. Auf der unteren Führungswange 19 ist ein weiterer Schlitten 33 gelagert, an dem ein Werkzeugunterteil 3 befestigt ist. Am Maschinengestell 20 sind zudem zwei im Abstand zueinander gegenüberliegende Transportmittel 34 für den Vorschub einer Blechtafel 4 und zwei Transportmittel 34' als Zugmittel angeordnet.

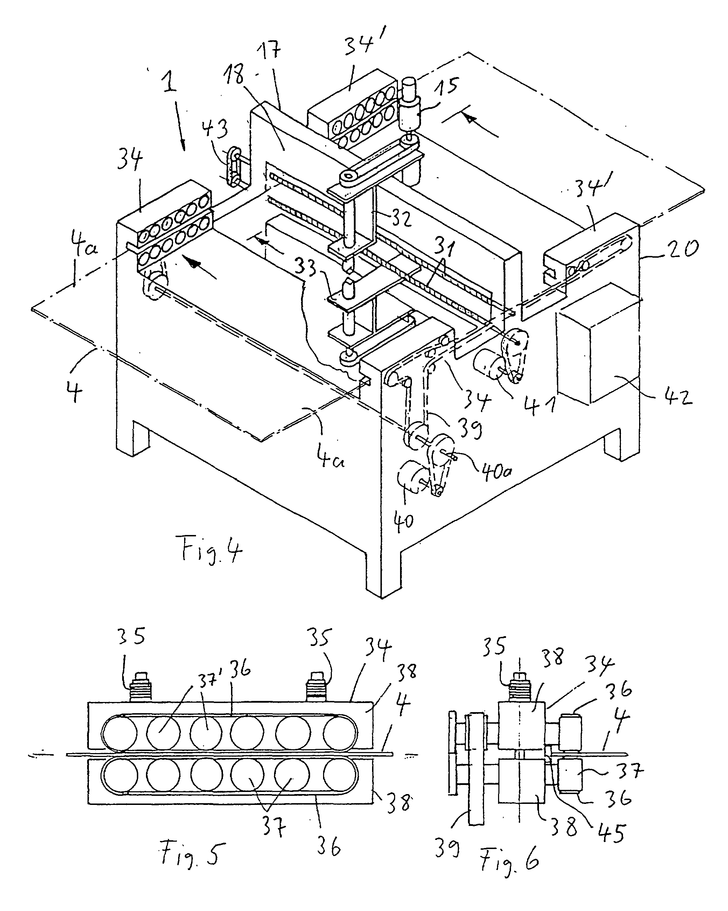

Das horizontale Verschieben des Werkzeugoberteils 2 und des Werkzeugunterteils erfolgt mit zwei Kugelspindeln 31, die jeweils an ihren Enden am Portalrahmen 17 gelagert sind. Wie die Figur 4 zeigt, wird die untere der beiden Spindeln 31 an einem Ende von einem Antrieb 41 angetrieben. Die Drehbewegung dieser Kugelspindel wird durch ein endloses flexibles Band 43 auf die obere der beiden Kugelspinden 32 übertragen. Beide Kugelspindeln 31 laufen zueinander synchron und entsprechend werden die beiden Werkzeugteile 2 und 3 synchron horizontal hin und her bewegt.

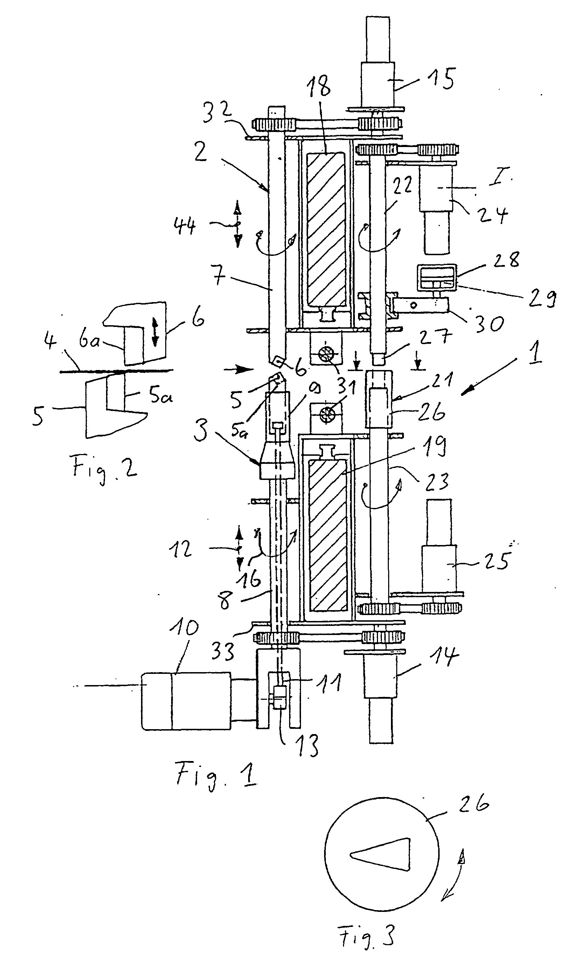

Der Werkzeugoberteil 2 weist eine vertikale Welle 7 auf, die am Schlitten 32 gelagert ist und die an ihrem unteren Ende ein feststehendes Messer 6 aufweist. Dieses Messer 6 kann eine auswechselbare Schneidplatte sein. Die Welle 7 ist mittels eines Drehantriebes 15 gesteuert in beiden Drehrichtungen drehbar. Zudem ist die Welle 7 in den Richtungen des Doppelpfeiles 44 vertikal verstellbar. Der Verstellbereich beträgt beispielsweise 10 mm. Das Messer 6 ist über der Ebene angeordnet, in welcher die Blechtafel 4 horizontal verschoben wird. Wie die Figur 2 zeigt, weist das Messer 6 eine vordere Schneidkante 6a auf.

Das Werkzeugunterteil 3 besitzt eine Hohlwelle 8, die vertikal verläuft und die ebenfalls mittels eines Drehantriebes 14 in beiden Richtungen des Pfeiles 16 drehbar ist. Am oberen Ende der Welle 8 befindet sich ein Führungsteil 9, in dem ein Werkzeughalter 5a mit einem Messer 5 vertikal verschieblich geführt ist. In der Hohlwelle 8 ist eine Hubstange 11 angeordnet, die an ihrem oberen Ende mit dem Werkzeugträger 5a verbunden ist. Am unteren Ende ist die Hubstange 11 an einem Exzenter 13 eines Hubantriebs 10 befestigt. Mittels des Hubantriebs 10 kann die Hubstange 11 und damit das Messer 5 vertikal oszillierend bewegt werden. Der Hub beträgt wenige Millimeter, vorzugsweise etwa 1,8 mm. Die Hubzahl beträgt beispielsweise etwa 2800 pro Minute. Die Drehmotoren 14 und 15 als auch der Hubmotor 10 sind von einem in Figur 4 schematisch angedeuteten Rechner 42 gesteuert.

An den Schlitten 32 und 33 ist zudem ein Stanzwerkzeug befestigt. Dieses Stanzwerkzeug 21 ist bezüglich der beiden Werkzeugteile 2 und 3 auf der gegenüberliegenden Seite der beiden Führungswangen 18 und 19 angeordnet. Das an sich bekannte Stanzwerkzeug 21 weist einen Werkzeugoberteil 27 und einen Werkzeugunterteil 26 auf. Beide Teile sind auf einer Welle 22 bzw. 23 angeordnet. Die obere Welle 22 ist mittels eines Drehantriebs 24 in beiden Drehrichtungen drehbar. Die untere Welle 23 ist über einen eigenen Drehantrieb 25 ebenfalls in beiden Drehrichtungen drehbar. Die obere Welle 22 ist mit dem oberen Werkzeugteil 27 zur Ausführung eines Stanzvorganges zu dem mittels eines pneumatischen oder hydraulischen Zylinders 28 vertikal bewegbar. Der Zylinder 28 besitzt einen Kolben 29 der über einen Verbindungssteg 30 fest mit der Welle 22 verbunden ist. Der gestellfeste Zylinder 28 ist ebenfalls über den Rechner 42 gesteuert. Mit dem Stanzwerkzeug können beispielsweise Nietlöcher in die Blechtafel 4 eingearbeitet werden.

Für den Transport der Blechtafel 4 sind am Maschinengestell zwei Vorschubbandpaare 34 und zwei Zugwalzenbandpaare 34' angeordnet. Diese Bandpaare 34 und 34' fassen die Blechtafel 4 an ihren Längsrändern 4a. Jedes Bandpaar 34 bzw. 34' weist gemäss den Figuren 5 und 6 zwei übereinander angeordnete Träger 38 auf, an denen jeweils mehrere Rollen 37 bzw. 37' gelagert sind und die jeweils ein endloses flexibles Transportband 36 aufnehmen. Wenigstens eine der oberen Rollen 37' ist über ein endloses Antriebsband 39 mit einem Antrieb verbunden. Zwei einstellbare Federn 35 pressen die beiden Bänder 36 gegeneinander und klemmen damit die Blechtafel 4 an einem Rand 4a fest. Eine Welle 40a verbindet die beiden Vorschubbandpaare 34, so dass diese genau synchron angetrieben sind. Der Antrieb 40 wird vorzugsweise ebenfalls über den Rechner 42 gesteuert. Die beiden Zugwalzenbandpaare 34' sind ebenfalls vom Band 39 und eine hier nicht gezeigte Welle angetrieben. Die Zugwalzenbandpaare 34' laufen somit ebenfalls synchron zu dem Bandpaaren 34. Seitlich ist die Blechtafel 4 an Anschlägen 45 geführt, die verstellbar und Rollen sein könnnen. Vorzugsweise weist jedes Bandpaar 34 bzw. 34' einen solchen Seitenanschlag 45 auf. Die Bandpaare 34 und 34' bilden eine kostengünstige und zudem zuverlässige und präzise Transportvorrichtung für die Blechtafel 4.

Um aus der Blechtafel 4 eine Form auszuschneiden, wird diese mit den beiden Vorschubbandpaaren 34 gesteuert in die Ausgangsposition gefahren. Die beiden Messer 5 und 6 sind hierbei im Abstand zueinander angeordnet, so dass die Blechtafel 4 zwischen diesen beiden Messern hindurch bewegt werden kann. Ist die Blechtafel 4 in der Ausgangsposition, so werden die beiden Messer 5 und 6 gleichzeitig und synchron mit den Antrieben 15 und 14 bezüglich der Schneidrichtung ausgerichtet. Zum Schneiden wird das obere Messer 6 gesenkt und dringt von oben in die Blechtafel 4 ein. Das untere Messer 5 wird mit einem Hub von beispielsweise 1,8 mm angehoben und führt mit diesem Hub eine vertikale oszillierende Bewegung aus. Hierbei arbeiten die beiden Schnittkanten 5a und 6a zusammen und schneiden hierbei die Blechtafel 4. Während des Schneidvorganges können gleichzeitig die Messer 5 und 6 um die Wellen 7 und 8 gedreht, die Blechtafel 4 verschoben und die beiden Schlitten 32 und 33 mit den Kugelspindeln 31 horizontal verfahren werden. Diese drei sich überlagernden Bewegungen werden durch die Antriebe 14, 15, 40 und 41 ausgeführt. Die Steuerung erfolgt über den Rechner 42 mit einem geeigneten Programm. Ist eine Blechform ausgeschnitten, so werden die beiden Messer 5 und 6 weggestellt und die Blechtafel 4 als auch die beiden Messer 5 und 6 werden zum Ausschneiden einer weiteren Blechform positioniert. Hierauf folgen wieder die obenerwähnten Bewegungsabläufe. Grundsätzlich kann ein Schnitt an jeder Stelle der Blechtafel begonnen werden.

Gleichzeitig und/oder anschliessend an den Schneidvorgang kann die Blechtafel 4 mittels der Stanzvorrichtung 21 gestanzt werden. Beispielsweise können Stanzlöcher in die Tafel 4 eingearbeitet werden. Da die Blechtafel 4 für den Stanzvorgahg nicht neu eingerichtet werden muss, ermöglicht dies eine sehr rationelle und genaue Bearbeitung.

## Patentansprüche

1. Vorrichtung zur Dünnblech-Bearbeitung, mit einem Werkzeugoberteil (2) und einem Werkzeugunterteil (3) sowie einer steuerbaren Blechtransporteinrichtung (34, 34'), wobei das Werkzeugoberteil (2) an einem unteren Ende und das Werkzeugunterteil (3) an einem oberen Ende ein Schneidmesser (6, 5) aufweisen, und mit motorischen Antriebsmitteln (14, 15), mit denen die beiden genannten Werkzeugteile (2, 3) gesteuert um eine vertikale Achse drehbar sind, wobei beide Messer (5, 6) feststehende Schneidkanten (5a, 6a) aufweisen und eines der beiden Messer (5) beim Schneiden mittels eines Hubantriebes (10) vertikal oszillierend bewegt wird, **dadurch gekennzeichnet, dass** die beiden Werkzeugteile (2, 3) mittels Spindeln (31) synchron und horizontal verfahrbar sind und dass eine Stanzvorrichtung (21) vorgesehen ist, die in Transportrichtung der Blechtafel (4) gesehen nach den Messern (5,6) angeordnet ist.

2. Vorrichtung nach Anspruch 1, **dadurch gekennzeichnet, dass** beide Messer (5, 6) jeweils eine im Wesentlichen gerade Schneidkante (5a, 6a) aufweisen.

3. Vorrichtung nach Anspruch 2, **dadurch gekennzeichnet, dass** wenigstens eine der beiden Schneidkanten (5aw, 6a) im Wesentlichen vertikal verläuft.

4. Vorrichtung nach einem der Ansprüche 1 bis 3, **dadurch gekennzeichnet, dass** das untere Messer (5) oszillierend bewegt wird.

5. Vorrichtung nach Anspruch 4, **dadurch gekennzeichnet, dass** der Werkzeugoberteil (2) und der Werkzeugunterteil (3) jeweils einen Drehantrieb (14, 15) aufweisen und diese beiden Drehantriebe (14, 15) synchron angetrieben sind.

6. Vorrichtung nach einem der Ansprüche 1 bis 5, **dadurch gekennzeichnet, dass** der Hub (12) des oszillierenden Messers (5) wenige Millimeter, vorzugsweise 1 bis 2 mm, vorzugsweise etwa 1,8 mm beträgt.

7. Vorrichtung nach einem der Ansprüche 1 bis 6, **gekennzeichnet durch** Transportmittel (34, 34'), welche die Blechtafel (4) an ihren parallel zur Transportrichtung verlaufenden Rändern (4a) fasst und mit wenigstens einem anliegenden Band (36) beaufschlagt.

8. Vorrichtung nach Anspruch 7, **dadurch gekennzeichnet, dass** die Stanzvorrichtung (21) einen unteren sowie einen oberen Werkzeugteil (26, 27) aufweist und beide Werkzeugteile jeweils einen Drehantrieb (24, 25) aufweisen.

## Claims

1. Apparatus for machining thin metal sheets, comprising a tool top part (2) and a tool bottom part (3) and also a controllable sheet-transport device (34, 34'), the tool top part (2) having a cutting blade (6) on a bottom end and the tool bottom part (3) having a cutting blade (5) on a top end, and comprising motor-operated drive means (14, 15), with which the two said tool parts (2, 3) are rotatable in a controlled manner about a vertical axis, both blades (5, 6) having fixed cutting edges (5a, 6a), and one of the two blades (5) being moved in a vertically oscillating manner by means of a reciprocating drive (10) during the cutting, **characterized in that** the two tool parts (2, 3) are synchronously and horizontally traversable by means of spindles (31), and **in that** a stamping device (21) is provided which, as viewed in the transport direction of the sheet-metal panel (4), is arranged downstream of the blades (5, 6).

2. Apparatus according to Claim 1, **characterized in that** both blades (5, 6) each have an essentially straight cutting edge (5a, 6a).

3. Apparatus according to Claim 2, **characterized in that** at least one of the two cutting edges (5a, 6a) runs essentially vertically.

4. Apparatus according to one of Claims 1 to 3, **characterized in that** the bottom blade (5) is moved in an oscillating manner.

5. Apparatus according to Claim 4, **characterized in that** the tool top part (2) and the tool bottom part (3) each have a rotary drive (14, 15), and these two rotary drives (14, 15) are driven synchronously.

6. Apparatus according to one of Claims 1 to 5, **characterized in that** the stroke (12) of the oscillating blade (5) is a few millimetres, preferably 1 to 2 mm, preferably about 1.8 mm.

7. Apparatus according to one of Claims 1 to 6, **characterized by** transport means (34, 34') which take hold of the sheet-metal panel (4) at its margins (4a) running parallel to the transport direction and act upon it with at least one adjacent belt (36).

8. Apparatus according to Claim 7, **characterized in that** the stamping device (21) has a bottom and a top tool part (26, 27), and both tool parts each have a rotary drive (24, 25).

## Revendications

1. Dispositif d'usinage de tôles minces, comprenant une partie supérieure d'outil (2) et une partie inférieure d'outil (3) ainsi qu'un mécanisme de transport de tôle commandable (34, 34'), la partie supérieure d'outil (2) présentant à une extrémité inférieure et la partie inférieure d'outil (3) présentant à une extrémité supérieure une lame de coupe (6, 5), et comprenant des moyens d'entraînement motorisés (14, 15) avec lesquels les deux dites parties d'outil (2, 3) peuvent tourner de manière commandée autour d'un axe vertical, les deux lames (5, 6) présentant des arêtes de coupe fixes (5a, 6a) et l'une des deux lames (5) étant déplacée de manière oscillante dans le sens vertical lors de la coupe au moyen d'un entraînement de levage (10), **caractérisé en ce que** les deux parties d'outil (2, 3) peuvent être déplacées de manière synchrone et dans le sens horizontal au moyen de broches (31) et qu'il est prévu un dispositif d'estampage (21) qui est disposé après les lames (5, 6) vu dans le sens de transport des panneaux en tôle (4).

2. Dispositif selon la revendication 1, **caractérisé en ce que** les deux lames (5, 6) présentent à chaque fois une arête de coupe (5a, 6a) essentiellement droite.

3. Dispositif selon la revendication 2, **caractérisé en ce qu'**au moins l'une des deux arêtes de coupe (5aw, 6a) s'étend essentiellement dans le sens vertical.

4. Dispositif selon l'une des revendications 1 à 3, **caractérisé en ce que** la lame inférieure (5) effectue un mouvement oscillant.

5. Dispositif selon la revendication 4, **caractérisé en ce que** la partie supérieure d'outil (2) et la partie inférieure d'outil (3) présentent respectivement un mécanisme d'entraînement rotatif (14, 15) et ces deux mécanismes d'entraînement rotatifs (14, 15) sont entraînés de manière synchrone.

6. Dispositif selon l'une des revendications 1 à 5, **caractérisé en ce que** la levée (12) de la lame oscillante (5) est de quelques millimètres, de préférence de 1 à 2 mm, de préférence environ de 1,8 mm.

7. Dispositif selon l'une des revendications 1 à 6, **caractérisé par** un moyen de transport (34, 34') qui saisit le panneau en tôle (4) par ses bords (4a) qui s'étendent parallèlement au sens de transport et qui les charge avec au moins une bande appliquée (36).

8. Dispositif selon la revendication 7, **caractérisé en ce que** le dispositif d'estampage (21) présente une partie inférieure et une partie supérieure d'outil (26, 27) et les deux parties d'outil présentent à chaque fois un mécanisme d'entraînement rotatif (24, 25).
